# EUROPEAN PATENT APPLICATION

(11) **EP 4 310 061 A1**
(43) Date of publication of application: **24.01.2024**
(21) Application number: 21931701.3
(22) Date of filing: 17.11.2021
(51) Int. Cl.: C03C 3/12

(54) **GLASS COMPOSITION, AND METHOD FOR PRODUCING GLASS COMPOSITION**

(30) Priority: 19.03.2021 WO PCT/JP2021/011319
(71) Applicant: NIKON CORPORATION, Minato-ku Tokyo 108-6290 (JP)
(72) Inventor: YOSHIMOTO, Kohei, Tokyo 108-6290 (JP); FUJIWARA, Miki, Tokyo 108-6290 (JP)
(74) Representative: Viering, Jentschura & Partner mbB Patent- und Rechtsanwälte
(86) International application number: PCT/JP2021/042286
(87) International publication number: WO 2022/195958

(57) **Abstract**

A glass composition includes, as main content components, by mass%, a TeO₂ content percentage of 50% to 80%, a Bi₂O₃ content percentage of 0% to 30%, a WO₃ content percentage of 0% to 30%, a ZnO content percentage of 0% to 30%, a BaO content percentage of 0% to 30%, a GeO₂ content percentage of 0% to 30%, and a Ga₂O₃ content percentage of 0% to 30%, wherein at least any one of additive target elements is introduced, the additive target elements including, Si⁴⁺ of 1 mg/kg to 1,500 mg/kg, B³⁺ of 1 mg/kg to 1,500 mg/kg, P⁵⁺ of 1 mg/kg to 1,500 mg/kg, Li⁺ of 1 mg/kg to 1,500 mg/kg, Na⁺ of 1 mg/kg to 1,500 mg/kg, K⁺ of 1 mg/kg to 1,500 mg/kg, Mg²⁺ of 1 mg/kg to 1,500 mg/kg, Ca²⁺ of 1 mg/kg to 1,500 mg/kg, Al³⁺ of 1 mg/kg to 1,500 mg/kg, and Sr²⁺ of 1 mg/kg to 1,500 mg/kg.

## Description

### TECHNICAL FIELD

The present invention relates to a glass composition and a method for producing a glass composition. The present invention claims priority to International Patent Application No. PCT/JP2021/011319, filed on March 19, 2021, the contents of which are incorporated by reference herein in its entirety in designated states where the incorporation of documents by reference is approved.

### BACKGROUND ART

A standard solid sample that enables an analysis for a trace element has been in demand for an element analysis of a solid matter, such as an inductively coupled plasma (ICP) mass spectrometry, a secondary ion mass spectrometry (SIMS), and an X-ray fluorescence (XRF) analysis.

### SUMMARY

A first aspect of the present invention is a glass composition including, as main content components, by mass%, a TeO₂ content percentage of 50% to 80%, a Bi₂O₃ content percentage of 0% to 30%, a WO₃ content percentage of 0% to 30%, a ZnO content percentage of 0% to 30%, a BaO content percentage of 0% to 30%, a GeO₂ content percentage of 0% to 30%, and a Ga₂O₃ content percentage of 0% to 30%, wherein at least any one of additive target elements is introduced, the additive target elements including, Si⁴⁺ of 1 mg/kg to 1,500 mg/kg, B³⁺ of 1 mg/kg to 1,500 mg/kg, P⁵⁺ of 1 mg/kg to 1,500 mg/kg, Li⁺ of 1 mg/kg to 1,500 mg/kg, Na⁺ of 1 mg/kg to 1,500 mg/kg, K⁺ of 1 mg/kg to 1,500 mg/kg, Mg²⁺ of 1 mg/kg to 1,500 mg/kg, Ca²⁺ of 1 mg/kg to 1,500 mg/kg, Al³⁺ of 1 mg/kg to 1,500 mg/kg, and Sr²⁺ of 1 mg/kg to 1,500 mg/kg. The glass composition is a glass composition including, as main content components, by mass%, a TeO₂ content percentage of 50% to 80%, a Bi₂O₃ content percentage of 0% to 30%, a WO₃ content percentage of 0% to 30%, a ZnO content percentage of 0% to 30%, a BaO content percentage of 0% to 30%, a GeO₂ content percentage of 0% to 30%, and a Ga₂O₃ content percentage of 0% to 30%, wherein the glass composition contains an additive target element being an element different from Te, Bi, W, Zn, Ba, Ge, and Ga, and the glass composition contains the additive target element by 1 mg/kg to 1,500 mg/kg per one element. The glass composition is a glass composition including at least any one of additive target elements being introduced to main content components, the additive target elements including Si⁴⁺ of 1 mg/kg to 1,500 mg/kg, B³⁺ of 1 mg/kg to 1,500 mg/kg, P⁵⁺ of 1 mg/kg to 1,500 mg/kg, Li⁺ of 1 mg/kg to 1,500 mg/kg, Na⁺ of 1 mg/kg to 1,500 mg/kg, K⁺ of 1 mg/kg to 1,500 mg/kg, Mg²⁺ of 1 mg/kg to 1,500 mg/kg, Ca²⁺ of 1 mg/kg to 1,500 mg/kg, Al³⁺ of 1 mg/kg to 1,500 mg/kg, and Sr²⁺ of 1 mg/kg to 1,500 mg/kg.

A second aspect of the present invention is a method for producing the glass composition described above.

### DETAILED DESCRIPTION

Hereinafter, description is made on an embodiment of the present invention (hereinafter, referred to as the "present embodiment"). The present embodiment described below is an example for describing the present invention, and is not intended to limit the present invention to the contents described below.

A glass composition according to the present embodiment is a glass composition including, as main content components, by mass%, a TeO₂ content percentage of 50% to 80%, a Bi₂O₃ content percentage of 0% to 30%, a WO₃ content percentage of 0% to 30%, a ZnO content percentage of 0% to 30%, a BaO content percentage of 0% to 30%, a GeO₂ content percentage of 0% to 30%, and a Ga₂O₃ content percentage of 0% to 30%, wherein at least any one of additive target elements is introduced, the additive target elements including, Si⁴⁺ of 1 mg/kg to 1,500 mg/kg, B³⁺ of 1 mg/kg to 1,500 mg/kg, P⁵⁺ of 1 mg/kg to 1,500 mg/kg, Li⁺ of 1 mg/kg to 1,500 mg/kg, Na⁺ of 1 mg/kg to 1,500 mg/kg, K⁺ of 1 mg/kg to 1,500 mg/kg, Mg²⁺ of 1 mg/kg to 1,500 mg/kg, Ca²⁺ of 1 mg/kg to 1,500 mg/kg, Al³⁺ of 1 mg/kg to 1,500 mg/kg, and Sr²⁺ of 1 mg/kg to 1,500 mg/kg.

The glass composition according to the present embodiment is a glass composition including main content components of the glass composition of, by mass%, a TeO₂ content percentage of 50% to 80%, a Bi₂O₃ content percentage of 0% to 30%, a WO₃ content percentage of 0% to 30%, a ZnO content percentage of 0% to 30%, a BaO content percentage of 0% to 30%, a GeO₂ content percentage of 0% to 30%, and a Ga₂O₃ content percentage of 0% to 30%, wherein the glass composition contains an additive target element being an element different from Te, Bi, W, Zn, Ba, Ge, and Ga, and the glass composition contains the additive target element by 1 mg/kg to 1,500 mg/kg per one element.

The glass composition according to the present embodiment is a glass composition including at least any one of additive target elements being introduced to main content components, the additive target elements including Si⁴⁺ of 1 mg/kg to 1,500 mg/kg, B³⁺ of 1 mg/kg to 1,500 mg/kg, P⁵⁺ of 1 mg/kg to 1,500 mg/kg, Li⁺ of 1 mg/kg to 1,500 mg/kg, Na⁺ of 1 mg/kg to 1,500 mg/kg, K⁺ of 1 mg/kg to 1,500 mg/kg, Mg²⁺ of 1 mg/kg to 1,500 mg/kg, Ca²⁺ of 1 mg/kg to 1,500 mg/kg, Al³⁺ of 1 mg/kg to 1,500 mg/kg, and Sr²⁺ of 1 mg/kg to 1,500 mg/kg.

In the present specification, a content percentage of each of main content components is expressed with mass% with respect to the total glass weight in terms of an oxide-converted composition, unless otherwise stated. Assuming that oxides, complex salt, and the like, which are used as raw materials as glass constituent components are all decomposed and turned into oxides at the time of melting, the oxide-converted composition described herein is a composition in which each component contained in the glass is expressed with a total mass of the oxides as 100 %. A content percentage of the additive target element is expressed as a content amount in a cation state with "mg/kg", unless otherwise stated. "mg/kg" is used similarly to mass ppm.

The expression that a Q content percentage of "0% to N%" is an expression indicating a case in which the Q component is not contained and a case in which the Q component is contained by a percentage of N% or less excluding 0%.

The expression "devitrification resistance stability" indicates resistance of the glass with respect to devitrification. Here, "devitrification" indicates a phenomenon of losing transparency of the glass due to crystallization, phase splitting, or the like at the time of raising a temperature of the glass to a glass transition temperature or higher or at the time of reducing the temperature to a liquid phase temperature or lower from a molten state.

The glass composition according to the present embodiment has a low melting temperature and high devitrification resistance stability. In the glass composition that has hitherto been produced, an unintended element is contained by a minute amount as "impurity". The glass composition according to the present embodiment is a glass composition containing an intended element by a minute amount while reducing a content amount of an unintended element. Thus, the glass composition may be used as a standard solid sample for a mass analysis such as an inductively coupled plasma (ICP) mass spectrometry, a secondary ion mass spectrometry (SIMS), and an X-ray fluorescence (XRF) analysis.

A component composition of the glass composition according to the present embodiment is described below.

In the present specification, the main content components indicate, for example, various oxides such as TeO₂, Bi₂O₃, WO₃, ZnO, BaO, GeO₂, and Ga₂O₃ that are generally adopted for a glass composition, and indicate a component forming the glass composition according to the present invention before the additive target element is introduced.

TeO₂ is a component that lowers a melting temperature of the glass and improves devitrification resistance stability, and is an essential component in the present invention. However, when the content percentage is excessively high, devitrification resistance stability is reduced. From such a viewpoint, the content percentage of TeO₂ is 50% to 80%. A lower limit of the content percentage is preferably 55%, more preferably, 60%. An upper limit of the content percentage is preferably 75%, more preferably, 70%.

Bi₂O₃ is a component that can lower a melting temperature of the glass and enhance devitrification resistance stability of the glass by coexisting with TeO₂. However, when the content percentage is excessively high, the content percentage of TeO₂ is relatively reduced, and devitrification resistance stability is rather degraded. From such a viewpoint, the content percentage of Bi₂O₃ is 0% to 30%. A lower limit of the content percentage is preferably 5%, more preferably, 10%. An upper limit of the content percentage is 25%, more preferably, 20%.

WO₃ is a component that can lower a melting temperature of the glass and enhance devitrification resistance stability of the glass by coexisting with TeO₂. However, when the content percentage is excessively high, the content percentage of TeO₂ is relatively reduced, and devitrification resistance stability is rather degraded. From such a viewpoint, the content percentage of WO₃ is 0% to 30%. A lower limit of the content percentage is preferably 5%, more preferably, 10%. An upper limit of the content percentage is 25%, more preferably, 20%.

ZnO is a component that can improve devitrification resistance stability of the glass and enhance devitrification resistance stability of the glass by coexisting with TeO₂. However, when an excessively high amount thereof is introduced, a melting temperature of the glass is increased. From such a viewpoint, the content percentage of ZnO is 0% to 30%. A lower limit of the content percentage is preferably 7%, more preferably, 15%. An upper limit of the content percentage is preferably 26%, more preferably, 22%.

BaO is a component that can improve devitrification resistance stability of the glass and enhance devitrification resistance stability of the glass by coexisting with TeO₂. However, when an excessively high amount thereof is introduced, a melting temperature of the glass is increased. From such a viewpoint, the content percentage of BaO is 0% to 30%. A lower limit of the content percentage is preferably 7%, more preferably, 15%. An upper limit of the content percentage is preferably 26%, more preferably, 22%.

GeO₂ is a component that improves devitrification resistance stability of the glass. However, when the content percentage is excessively high, a melting temperature of the glass is increased. GeO₂ is also an expensive raw material. From such a viewpoint, the content percentage of GeO₂ is 0% to 30%. A lower limit of the content percentage is preferably 5%, more preferably, 10%. An upper limit of the content percentage is preferably 25%, more preferably, 20%.

Ga₂O₃ is a component that improves devitrification resistance stability of the glass. However, when the content percentage is excessively high, a melting temperature of the glass is increased. Ga₂O₃ is also an expensive raw material. From such a viewpoint, the content percentage of Ga₂O₃ is 0% to 30%. A lower limit of the content percentage is preferably 5%, more preferably, 10%. An upper limit of the content percentage is preferably 25%, more preferably, 20%.

Stable glass cannot be formed with TeO₂ alone. However, stable glass with high devitrification resistance stability can be obtained by coexisting with a certain amount of Bi₂O₃, WO₃, ZnO, BaO, GeO₂, Ga₂O₃, and the like. Therefore, a total content percentage of Bi₂O₃, WO₃, ZnO, BaO, GeO₂, and Ga₂O₃ (Bi₂O₃ + WO₃ + ZnO + BaO + GeO₂ + Ga₂O₃) is 15% to 50%. A lower limit of the total content percentage is preferably 25%, more preferably, 30%. An upper limit of the total content percentage is preferably 40%, more preferably, 35%.

A content percentage of a first oxide included in the main content components is 50% to 80%. A lower limit of the content percentage is preferably 55%, more preferably, 60%. An upper limit of the content percentage is preferably 75%, more preferably, 70%. It is preferred that oxides containing cations (Si⁴⁺, B³⁺, P⁵⁺, Li⁺, Na⁺, K⁺, Mg²⁺, Ca²⁺, Al³⁺, and/or Sr²⁺) that may be added as the additive target element, for example, oxides such as SiO₂, B₂O₃, and P₂O₅ be not contained. The first oxide is more preferably TeO₂.

A content percentage of a second oxide included in the main content components is 0% to 30%. A lower limit of the content percentage is preferably 5%, more preferably, 10%. An upper limit of the content percentage is preferably 25%, more preferably, 20%. Note that the second oxide is at least any one of Bi₂O₃, WO₃, ZnO, BaO, GeO₂, and Ga₂O₃. Note that, when the second oxide includes two or more kinds of oxides, similarly to a case in which the second oxide includes one kind of oxide, a content percentage of each oxide is also 0% to 30%.

When the second oxide is one or more kinds selected from Bi₂O₃, WO₃, ZnO, BaO, GeO₂, Ga₂O₃, the total content percentage of Bi₂O₃, WO₃, ZnO, BaO, GeO₂, and Ga₂O₃ (Bi₂O₃ + WO₃ + ZnO + BaO + GeO₂ + Ga₂O₃) is preferably 15% to 50%.

A content percentage of a third oxide included in the main content components is 0% to 1%. An upper limit of the content percentage is preferably 0.5%. The third oxide is preferably at least any one of BeO, PbO, As₂O₃, Tl₂O, CdO, UO₂, and Th₂O₃. Note that, when the third oxide includes two or more kinds of oxides, similarly to a case in which the third oxide includes one kind of oxide, a content percentage of each oxide is also 0% to 1%.

When the third oxide is one or more kinds selected from BeO, PbO, As₂O₃, Tl₂O, CdO, UO₂, and Th₂O₃, the total content percentage of BeO, PbO, As₂O₃, Tl₂O, CdO, UO₂, and Th₂O₃ (BeO + PbO + As₂O₃ + Tl₂O + CdO + UO₂ + Th₂O₃) is further preferably 1% or less.

In accordance with a purpose of an element analysis or the like, in the glass composition according to the present embodiment, cations Si⁴⁺, B³⁺, P⁵⁺, Li⁺, Na⁺, K⁺, Mg²⁺, Ca²⁺, Al³⁺ and/or Sr²⁺ as the additive target element are each introduced by a mass of 1 mg/kg to 1,500 mg/kg (= mass ppm). As the cations that may be added as the additive target element, one to 10 kinds of additive elements may be selected for a piece of glass and added in a glass composition.

BeO, PbO, As₂O₃, Tl₂O, CdO, UO₂, and Th₂O₃ are components that disadvantageously affect a human body and the environment. Therefore, the concentration percentage of each of the components including BeO, PbO, As₂O₃, Tl₂O, CdO, UO₂, and Th₂O₃ is preferably 1% or less. Further, the total content percentage of BeO, PbO, As₂O₃, Tl₂O, CdO, UO₂, and Th₂O₃ (BeO + PbO + As₂O₃ + Tl₂O + CdO + UO₂ + Th₂O₃) is preferably 1% or less.

The components are not limited to those described above, and any other arbitrary components may be added within a range in which the glass composition being an object of the present embodiment can be achieved.

A method for producing a glass composition according to the present embodiment is described below.

The method for producing a glass composition according to the present embodiment includes:
i) a step of immersing a crucible and a tool for melting in an acid solution for 1 to 24 hours for cleansing;
ii) a step of rinsing the crucible and the tool for melting with purified water;
iii) a step of drying the crucible and the tool for melting;
iv) a step of obtaining a mixture by mixing main content components and one or more additive target elements in the crucible and melting the main content components and the one or more additive target elements for 30 minutes to 8 hours while stirring the main content components and the one or more additive target elements with the tool at a temperature of 800 degrees Celsius to 900 degrees Celsius, the additive target elements including:
   Si⁴⁺ of 1 mg/kg to 1,500 mg/kg;
   B³⁺ of 1 mg/kg to 1,500 mg/kg;
   P⁵⁺ of 1 mg/kg to 1,500 mg/kg;
   Li⁺ of 1 mg/kg to 1,500 mg/kg;
   Na⁺ of 1 mg/kg to 1,500 mg/kg;
   K⁺ of 1 mg/kg to 1,500 mg/kg;
   Mg²⁺ of 1 mg/kg to 1,500 mg/kg;
   Ca²⁺ of 1 mg/kg to 1,500 mg/kg;
   Al³⁺ of 1 mg/kg to 1,500 mg/kg; and
   Sr²⁺ of 1 mg/kg to 1,500 mg/kg; and
v) a step of casting the mixture in a mold and performing slow cooling.

### Step i) to Step iii)

In order to prevent contamination with impurities, all the crucible and the tool for melting such as a lid and a stirring blade are immersed in advance in the acid solution, preferably for approximately 1 to 24 hours, more preferably, approximately 5 to 16 hours. The acid solution is preferably an acid solution including at least any one of a hydrofluoric acid, a hydrochloric acid, a nitric acid, and a sulfuric acid, more preferably, a hydrofluoric acid solution with a concentration of 30% to 50%.

The crucible and the tool for melting such as a lid and a stirring blade that are immersed are cleansed, rinsed with purified water, and then dried.

The crucible and the tool for melting such as a lid and a stirring blade contain metal being at least any one of platinum, gold, and iridium because such metal has low reactivity with glass melt, which prevents erosion of the crucible with the melt, and has high acid resistance.

### Step iv)

The main content components such as an oxide, a hydroxide, a carbonate, and a nitrate are weighed so as to obtain the above-mentioned component composition (mass%) of the glass composition according to the present embodiment.

The weighed main content components are mixed and fed into the crucible. Then, the additive target element is added by a certain amount, in accordance with a purpose. The additive target element is introduced by a method of directly feeding a raw material such as an oxide, a hydroxide, a carbonate, and a nitrate or a method of dripping a constant amount of a nitrate aqueous solution containing the additive target element. When the method of dripping a constant amount is adopted, the solution is not limited to the nitrate aqueous solution, and may be a solution in which the additive target element is stably dissolved.

The additive target elements are one or more kinds of cations selected from a group consisting of Si⁴⁺, B³⁺, P⁵⁺, Li⁺, Na⁺, K⁺, Mg²⁺, Ca²⁺, Al³⁺, and Sr²⁺, and are each added by a mass of 1 mg/kg to 1,500 mg/kg. As the cations that may be added as the additive target element, one to 10 kinds of additive elements may be selected for a piece of glass and added in a glass composition.

The crucible is covered with a lid, and melting and stirring are performed for homogenization at a temperature of 800 degrees Celsius to 900 degrees Celsius, preferably, a temperature of 800 degrees Celsius to 850 degrees Celsius, for 30 minutes to 8 hours, preferably, 1 hour to 5 hours.

### Step v)

After the temperature is suitably reduced, casting in a mold or the like is performed, and then slow cooling is performed. With this, each glass sample is obtained. In order to determinate vitrification, no crystallization is visually confirmed.

Suitable characteristics of the glass composition according to the present are described below.

A melting temperature of the glass composition according to the present embodiment is 900 degrees Celsius or lower, in order to prevent volatilization of the additive target element during melting, which changes a concentration level of the additive target element. An upper limit of the melting temperature is preferably 850 degrees Celsius, more preferably, 800 degrees Celsius.

The glass composition according to the present embodiment has devitrification resistance stability, and further contains an intended element by a minute amount while reducing a content amount of an unintended element.

The glass composition according to the present embodiment having the above-mentioned characteristics may be used as, for example, a standard solid sample for an element analysis, and may be used suitably as a standard solid sample that enables an analysis of Si⁴⁺, B³⁺, P⁵⁺, Li⁺, Na⁺, K⁺, Mg²⁺, Ca²⁺, Al³, or Sr²⁺, in particular.

### Examples

Next, examples of the present invention and comparative examples are described. The present invention is not limited to those examples.

### <Production of Glass Composition>

The glass composition in each of the examples and each of the comparative examples was produced by the following procedures.

First, according to chemical compositions (mass%) described in Table 1 to Table 8, glass raw materials such as an oxide, a hydroxide, a carbonate, and a nitrate were weighed so that the total weight thereof was 100 g.

In a case of an addition at a high concentration (200 ppm or more), the additive target element was introduced by a method of directly feeding raw materials containing the additive target element. In a case of an addition at a low concentration (less than 200 ppm), the additive target element was introduced by a method of dripping a constant amount of a nitrate aqueous solution containing the additive target element.

Subsequently, the weighed glass raw materials were mixed and fed in a platinum crucible, and were melted and stirred for homogenization at a temperature of 800 degrees Celsius to 1100 degrees Celsius, for 1 hour to 2 hours. Then, casting in a mold or the like was performed after the temperature was suitably reduced, and slow cooling was performed. With this, each glass sample was obtained. In order to determinate vitrification, no crystallization was visually confirmed.

In order to prevent contamination with impurities, all of a platinum crucible, a platinum lid used during melting, a platinum stirring blade used during melting were immersed in advance in a hydrofluoric acid solution with a concentration of 30% to 50% for approximately 5 to 16 hours for cleansing, rinsed with purified water, and then dried before use.

### <Quantitative Analysis of Glass Composition>

First, after cleansing a glass sample surface with a dilute acid, each of the glass samples thus produced was pulverized. The pulverized glass sample was dissolved in the acid solution, and the volume thereof was determined by pure water. The solution thus obtained was used as a test solution.

The test solution described above was subjected to an additive element quantitative analysis by using an ICP emission spectrometric apparatus (ICPS-8100 produced by Shimadzu Corporation) or an ICP mass spectroscopy apparatus (Agilent 7700x produced by Agilent Technologies). In this state, a liquid standard sample containing the additive target element at a known concentration was used to create a calibration curve within an appropriate concentration range. Then, an amount of the additive target element in the glass being an analysis target was obtained.

Tables 1 to 8 show a component composition (on a mass basis), a melting temperature, and presence or absence of devitrification in each of the examples and each of the comparative examples.

### [Table 1]

**Table 1**

| | | Example 1 | Example 2 | Example 3 | Example 4 | Example 5 |
|---|---|---|---|---|---|---|
| Main content component (wt%) | TeO₂ | 61.59 | 61. 59 | 61.59 | 61. 59 | 61. 59 |
| | Bi₂O₃ | 12.84 | 12.84 | 12.84 | 12. 84 | 12.84 |
| | WO₃ | 25.56 | 25. 56 | 25. 56 | 25. 56 | 25. 56 |
| | ZnO | | | | | |
| | BaO | | | | | |
| | GeO₂ | | | | | |
| | Ga₂O₃ | | | | | |
| | TiO₂ | | | | | |
| | Nb₂O₅ | | | | | |
| | Sb₂O₃ | | | | | |
| | Total | 100.00 | 100.00 | 100. 00 | 100.00 | 100.00 |
| Melting temperature (°C) | | 800 | 800 | 800 | 800 | 800 |
| Presence or absence of devitrification | | absent | absent | absent | absent | absent |
| ICP quantitative value (mg/kg) | Si4+ | | | | | |
| | B³⁺ | 473 | | | | |
| | P⁵⁺ | | 7 | | | |
| | Li⁺ | | | 484 | | |
| | Na⁺ | | | | 9 | |
| | K⁺ | | | | | |
| | Mg²⁺ | | | | | 92 |
| | Ca²⁺ | | | | | |
| | Al³⁺ | | | | | |
| | Sr²⁺ | | | | | |

### [Table 2]

**Table 2**

| | | Example 6 | Example 7 | Example 8 | Example 9 | Example 10 |
|---|---|---|---|---|---|---|
| Main content component (wt%) | TeO₂ | 61. 59 | 67. 10 | 67. 10 | 67. 10 | 67. 10 |
| | Bi₂O₃ | 12.84 | | | | |
| | WO₃ | 25. 56 | | | | |
| | ZnO | | 11.41 | 11.41 | 11.41 | 11.41 |
| | BaO | | 21. 49 | 21. 49 | 21. 49 | 21. 49 |
| | GeO₂ | | | | | |
| | Ga₂O₃ | | | | | |
| | TiO₂ | | | | | |
| | Nb₂O₅ | | | | | |
| | Sb₂O₃ | | | | | |
| | Total | 100.00 | 100. 00 | 100.00 | 100.00 | 100.00 |
| Melting temperature (°C) | | 800 | 800 | 800 | 800 | 800 |
| Presence or absence of devitrification | | absent | absent | absent | absent | absent |
| ICP quantitative value (mg/kg) | Si⁴⁺ | | 10 | | | |
| | B³⁺ | | | 93 | | |
| | P⁵⁺ | | | | 507 | |
| | Li⁺ | | | | | 9 |
| | Na⁺ | | | | | |
| | K⁺ | | | | | |
| | Mg²⁺ | | | | | |
| | Ca²⁺ | | | | | |
| | Al³⁺ | 104 | | | | |
| | Sr²⁺ | | | | | |

### [Table 3]

**Table 3**

| | | Example 11 | Example 12 | Example 13 | Example 14 | Example 15 |
|---|---|---|---|---|---|---|
| Main content component (wt%) | TeO₂ | 67. 10 | 67. 10 | 67. 10 | 67. 10 | 67. 10 |
| | Bi₂O₃ | | | | | |
| | WO₃ | | | | | |
| | ZnO | 11.41 | 11.41 | 11.41 | 11.41 | 11.41 |
| | BaO | 21. 49 | 21. 49 | 21.49 | 21.49 | 21. 49 |
| | GeO₂ | | | | | |
| | Ga₂O₃ | | | | | |
| | TiO₂ | | | | | |
| | Nb₂O₅ | | | | | |
| | Sb₂O₃ | | | | | |
| | Total | 100. 00 | 100.00 | 100.00 | 100.00 | 100.00 |
| Melting temperature (°C) | | 800 | 800 | 800 | 800 | 800 |
| Presence or absence of devitrification | | absent | absent | absent | absent | absent |
| ICP quantitative value (mg/kg) | Si⁴⁺ | | | | | |
| | B³⁺ | | | | | |
| | P⁵⁺ | | | | | |
| | Li⁺ | | | | | |
| | Na⁺ | 97 | | | | |
| | K⁺ | | 478 | | | |
| | Mg²⁺ | | | 10 | | |
| | Ca²⁺ | | | | 100 | |
| | Al³⁺ | | | | | 496 |
| | Sr²⁺ | | | | | |

### [Table 4]

**Table 4**

| | | Example 16 | Example 17 | Example 18 | Example 19 | Example 20 |
|---|---|---|---|---|---|---|
| Main content component (wt%) | TeO₂ | 67.10 | 67. 10 | 67. 10 | 67. 34 | 67.34 |
| | Bi₂O₃ | | | | 24. 57 | 24.57 |
| | WO₃ | | | | | |
| | ZnO | 11.41 | 11.41 | 11.41 | | |
| | BaO | 21. 49 | 21. 49 | 21. 49 | 8.09 | 8. 09 |
| | GeO₂ | | | | | |
| | Ga₂O₃ | | | | | |
| | TiO₂ | | | | | |
| | Nb₂O₅ | | | | | |
| | Sb₂O₃ | | | | | |
| | Total | 100.00 | 100.00 | 100.00 | 100.00 | 100.00 |
| Melting temperature (°C) | | 800 | 800 | 800 | 900 | 800 |
| Presence or absence of devitrification | | absent | absent | absent | absent | absent |
| ICP quantitative value (mg/kg) | Si⁴⁺ | 13 | 99 | 455 | 104 | |
| | B³⁺ | 10 | 90 | 519 | | |
| | P⁵⁺ | 9 | 84 | 741 | | |
| | Li⁺ | 10 | 93 | 480 | | 91 |
| | Na⁺ | 6 | 110 | 545 | | |
| | K⁺ | 9 | 86 | 676 | | |
| | Mg²⁺ | 10 | 87 | 411 | | |
| | Ca²⁺ | 10 | 93 | 496 | | |
| | Al³⁺ | 9 | 89 | 484 | | |
| | Sr²⁺ | | | | | |

### [Table 5]

**Table 5**

| | | Example 21 | Example 22 | Example 23 | Example 24 | Example 25 |
|---|---|---|---|---|---|---|
| Main content component (wt%) | TeO₂ | 67.34 | 67. 34 | 67. 34 | 67.34 | 73.80 |
| | Bi₂O₃ | 24. 57 | 24. 57 | 24. 57 | 24. 57 | |
| | WO₃ | | | | | |
| | ZnO | | | | | |
| | BaO | 8. 09 | 8.09 | 8.09 | 8. 09 | |
| | GeO₂ | | | | | 13.82 |
| | Ga₂O₃ | | | | | 12. 38 |
| | TiO₂ | | | | | |
| | Nb₂O₅ | | | | | |
| | Sb₂O₃ | | | | | |
| | Total | 100.00 | 100.00 | 100.00 | 100.00 | 100.00 |
| Melting temperature (°C) | | 800 | 800 | 800 | 800 | 850 |
| Presence or absence of devitrification | | absent | absent | absent | absent | absent |
| ICP quantitative value (mg/kg) | Si⁴⁺ | | | | | 493 |
| | B³⁺ | | | | | |
| | P⁵⁺ | | | | | |
| | Li⁺ | | | | | |
| | Na⁺ | 609 | | | | |
| | K⁺ | | 12 | | | |
| | Mg²⁺ | | | | | |
| | Ca²⁺ | | | 495 | | |
| | Al³⁺ | | | | 10 | |
| | Sr²⁺ | | | | | |

### [Table 6]

**Table 6**

| | | Example 26 | Example 27 | Example 28 | Example 29 | Example 30 |
|---|---|---|---|---|---|---|
| Main content component (wt%) | TeO₂ | 73. 80 | 73.80 | 73.80 | 73.80 | 73.80 |
| | Bi₂O₃ | | | | | |
| | WO₃ | | | | | |
| | ZnO | | | | | |
| | BaO | | | | | |
| | GeO₂ | 13.82 | 13.82 | 13.82 | 13.82 | 13.82 |
| | Ga₂O₃ | 12. 38 | 12.38 | 12.38 | 12.38 | 12.38 |
| | TiO₂ | | | | | |
| | Nb₂O₅ | | | | | |
| | Sb₂O₃ | | | | | |
| | Total | 100.00 | 100. 00 | 100.00 | 100.00 | 100.00 |
| Melting temperature (°C) | | 850 | 850 | 850 | 850 | 850 |
| Presence or absence of devitrification | | absent | absent | absent | absent | absent |
| ICP quantitative value (mg/kg) | Si⁴⁺ | | | | | |
| | B³⁺ | 7 | | | | |
| | P⁵⁺ | | 148 | | | |
| | Li⁺ | | | | | |
| | Na⁺ | | | | | |
| | K⁺ | | | 91 | | |
| | Mg²⁺ | | | | 427 | |
| | Ca²⁺ | | | | | 11 |
| | Al³⁺ | | | | | |
| | Sr²⁺ | | | | | |

### [Table 7]

**Table 7**

| | | Example 31 | Example 32 |
|---|---|---|---|
| Main content component (wt%) | TeO₂ | 67. 10 | 67. 10 |
| | Bi₂O₃ | | |
| | WO₃ | | |
| | ZnO | 11.41 | 11.41 |
| | BaO | 21.49 | 21.49 |
| | GeO₂ | | |
| | Ga₂O₃ | | |
| | TiO₂ | | |
| | Nb₂O₅ | | |
| | Sb₂O₃ | | |
| | Total | | |
| Melting temperature (°C) | | 850 | 850 |
| Presence or absence of devitrification | | absent | absent |
| ICP quantitative value (mg/kg) | Si⁴⁺ | 1024 | 106 |
| | B³⁺ | 991 | 101 |
| | P⁵⁺ | 1048 | 91 |
| | Li⁺ | 863 | 95 |
| | Na⁺ | 1002 | 179 |
| | K⁺ | 1006 | 101 |
| | Mg²⁺ | 856 | 86 |
| | Ca²⁺ | 866 | 98 |
| | Al³⁺ | 986 | 95 |
| | Sr²⁺ | 982 | 108 |

### [Table 8]

**Table 8**

| | | Comparative Example 1 | Comparative Example 2 | Comparative Example 3 | Comparative Example 4 | Comparative Example 5 | Comparative Example 6 |
|---|---|---|---|---|---|---|---|
| Main content component (wt%) | Te0₂ | | | | 88. 69 | 85. 56 | 64. 63 |
| | Bi₂0₃ | | 87.95 | 28.60 | | | |
| | W0₃ | 19. 52 | | 66.41 | | | |
| | ZnO | 6.85 | | 5.00 | 11.31 | 8. 73 | |
| | Ba0 | | 4. 45 | | | | |
| | Ge0₂ | | 7.59 | | | | |
| | Ga₂0₃ | | | | | | |
| | TiO₂ | | | | | 5. 71 | 4. 62 |
| | Nb₂0₅ | | | | | | 30. 75 |
| | Sb₂0₃ | 73.63 | | | | | |
| | Total | 100.00 | 100.00 | 100.00 | 100.00 | 100.00 | 100.00 |
| Melting temperature (°C) | | 800 | 1000 | 1100 | 800 | 850 | 900 |
| Presence or absence ot devitrification | | present | present | present | present | present | present |
| ICP quantitative value (mg/kg) | Si⁴⁺ | - | - | - | - | - | - |
| | B³⁺ | - | - | - | - | - | - |
| | P⁵⁺ | - | - | - | - | - | - |
| | Li⁺ | - | - | - | - | - | - |
| | Na⁺ | - | - | - | - | - | - |
| | K⁺ | - | - | - | - | - | - |
| | Mg²⁺ | - | - | - | - | - | - |
| | Ca²⁺ | - | - | - | - | - | - |
| | Al³⁺ | - | - | - | - | - | - |
| | Sr²⁺ | - | - | - | - | - | - |

As shown above, it was confirmed that the glass composition in each of the examples had a low melting temperature without devitrification. Meanwhile, in Comparative Examples 2, 3, and 6, the melting temperature was 900 degrees Celsius or higher, and devitrification was confirmed in all the comparative examples.

Based on the ICP quantitative value of the glass composition in each of the examples, it was confirmed that the intended additive target element was introduced by the intended amount in the glass composition.

## Claims

1. A glass composition comprising, as main content components, by mass%:
a TeO₂ content percentage of 50% to 80%;
a Bi₂O₃ content percentage of 0% to 30%;
a WO₃ content percentage of 0% to 30%;
a ZnO content percentage of 0% to 30%;
a BaO content percentage of 0% to 30%;
a GeO₂ content percentage of 0% to 30%; and
a Ga₂O₃ content percentage of 0% to 30%, wherein
at least any one of additive target elements is introduced, the additive target elements including:
Si⁴⁺ of 1 mg/kg to 1,500 mg/kg;
B³⁺ of 1 mg/kg to 1,500 mg/kg;
P⁵⁺ of 1 mg/kg to 1,500 mg/kg;
Li⁺ of 1 mg/kg to 1,500 mg/kg;
Na⁺ of 1 mg/kg to 1,500 mg/kg;
K⁺ of 1 mg/kg to 1,500 mg/kg;
Mg²⁺ of 1 mg/kg to 1,500 mg/kg;
Ca²⁺ of 1 mg/kg to 1,500 mg/kg;
Al³⁺ of 1 mg/kg to 1,500 mg/kg; and
Sr²⁺ of 1 mg/kg to 1,500 mg/kg.

2. A glass composition comprising, as main content components, by mass%:
a TeO₂ content percentage of 50% to 80%;
a Bi₂O₃ content percentage of 0% to 30%;
a WO₃ content percentage of 0% to 30%;
a ZnO content percentage of 0% to 30%;
a BaO content percentage of 0% to 30%;
a GeO₂ content percentage of 0% to 30%; and
a Ga₂O₃ content percentage of 0% to 30%, wherein
the glass composition contains an additive target element being an element different from Te, Bi, W, Zn, Ba, Ge, and Ga, and
the additive target element is contained by 1 mg/kg to 1,500 mg/kg per one element.

3. The glass composition according to claim 2, wherein
the additive target element includes at least one of Si, B, P, Li, Na, K, Mg, Ca, Al, and Sr.

4. The glass composition according to any one of claims 1 to 3, wherein
by mass%, a total content percentage of Bi₂O₃, WO₃, ZnO, BaO, GeO₂, and Ga₂O₃ (Bi₂O₃ + WO₃ + ZnO + BaO + GeO₂ + Ga₂O₃) is 15% to 50%.

5. The glass composition according to any one of claims 1 to 4, comprising, by mass%,
a BeO content percentage of 0% to 1%;
a PbO content percentage of 0% to 1%;
an As₂O₃ content percentage of 0% to 1%;
a Tl₂O content percentage of 0% to 1%;
a CdO content percentage of 0% to 1%;
a UO₂ content percentage of 0% to 1%; and
a Th₂O₃ content percentage of 0% to 1%.

6. The glass composition according to claim 5, wherein
by mass%, a total content percentage of BeO, PbO, As₂O₃, Tl₂O, CdO, UO₂, and Th₂O₃ (BeO + PbO + As₂O₃ + Tl₂O + CdO + UO₂ + Th₂O₃) is 1% or less.

7. A glass composition, comprising:
at least any one of additive target elements being introduced to main content components, the additive target elements including:
Si⁴⁺ of 1 mg/kg to 1,500 mg/kg;
B³⁺ of 1 mg/kg to 1,500 mg/kg;
P⁵⁺ of 1 mg/kg to 1,500 mg/kg;
Li⁺ of 1 mg/kg to 1,500 mg/kg;
Na⁺ of 1 mg/kg to 1,500 mg/kg;
K⁺ of 1 mg/kg to 1,500 mg/kg;
Mg²⁺ of 1 mg/kg to 1,500 mg/kg;
Ca²⁺ of 1 mg/kg to 1,500 mg/kg;
Al³⁺ of 1 mg/kg to 1,500 mg/kg; and
Sr²⁺ of 1 mg/kg to 1,500 mg/kg.

8. The glass composition according to claim 7, wherein
by mass%, a content percentage of a first oxide included in the main content components is 50% to 80%, the first oxide being other than SiO₂, B₂O₃, and P₂O₅.

9. The glass composition according to claim 8, wherein
the first oxide is TeO₂.

10. The glass composition according to claim 8 or 9, wherein
by mass%, a content percentage of a second oxide included in the main content components is 0% to 30%.

11. The glass composition according to claim 10, wherein
the second oxide includes at least any one of Bi₂O₃, WO₃, ZnO, BaO, GeO₂, and Ga₂O₃.

12. The glass composition according to claim 11, wherein
by mass%, a total content percentage of Bi₂O₃, WO₃, ZnO, BaO, GeO₂, and Ga₂O₃ (Bi₂O₃ + WO₃ + ZnO + BaO + GeO₂ + Ga₂O₃) is 15% to 50%.

13. The glass composition according to any one of claims 8 to 12, wherein
by mass%, a content percentage of a third oxide included in the main content components is 0% to 1%.

14. The glass composition according to claim 13, wherein
the third oxide includes at least any one of BeO, PbO, As₂O₃, Tl₂O, CdO, UO₂, and Th₂O₃.

15. The glass composition according to claim 14, wherein
by mass%, a total content percentage of BeO, PbO, As₂O₃, Tl₂O, CdO, UO₂, and Th₂O₃ (BeO + PbO + As₂O₃ + Tl₂O + CdO + UO₂ + Th₂O₃) is 1% or less.

16. The glass composition according to any one of claims 1 to 15, wherein
a melting temperature is 900 degrees Celsius or lower.

17. The glass composition according to any one of claims 1 to 16, wherein
the glass composition is a standard sample for an element analysis.

18. The glass composition according to claim 17, wherein
the standard sample for an element analysis is a standard sample for an inductively coupled plasma (ICP) mass spectrometry, a secondary ion mass spectrometry (SIMS), and/or an X-ray fluorescence (XRF) analysis.

19. A method for producing a glass composition, the glass composition being according to any one of claims 1 to 18, the method comprising:
i) a step of immersing a crucible and a tool for melting in an acid solution for 1 to 24 hours for cleansing;
ii) a step of rinsing the crucible and the tool for melting with purified water;
iii) a step of drying the crucible and the tool for melting;
iv) a step of obtaining a mixture by mixing main content components and one or more additive target elements in the crucible and melting the main content components and the one or more additive target elements for 30 minutes to 8 hours while stirring the main content components and the one or more additive target elements with the tool at a temperature of 800 degrees Celsius to 900 degrees Celsius, the additive target elements including:
Si⁴⁺ of 1 mg/kg to 1,500 mg/kg;
B³⁺ of 1 mg/kg to 1,500 mg/kg;
P⁵⁺ of 1 mg/kg to 1,500 mg/kg;
Li⁺ of 1 mg/kg to 1,500 mg/kg;
Na⁺ of 1 mg/kg to 1,500 mg/kg;
K⁺ of 1 mg/kg to 1,500 mg/kg;
Mg²⁺ of 1 mg/kg to 1,500 mg/kg;
Ca²⁺ of 1 mg/kg to 1,500 mg/kg;
Al³⁺ of 1 mg/kg to 1,500 mg/kg; and
Sr²⁺ of 1 mg/kg to 1,500 mg/kg; and
v) a step of casting the mixture in a mold and performing slow cooling.

20. The method for producing the glass composition according to claim 19, wherein
the main content components are, by mass%:
a TeO₂ content percentage of 50% to 80%;
a Bi₂O₃ content percentage of 0% to 30%;
a WO₃ content percentage of 0% to 30%;
a ZnO content percentage of 0% to 30%;
a BaO content percentage of 0% to 30%;
a GeO₂ content percentage of 0% to 30%; and
a Ga₂O₃ content percentage of 0% to 30%.

21. The method for producing the glass composition according to claim 19 or 20, wherein
a total content percentage of Bi₂O₃, WO₃, ZnO, BaO, GeO₂, and Ga₂O₃ (Bi₂O₃ + WO₃ + ZnO + BaO + GeO₂ + Ga₂O₃) is 15% to 50%.

22. The method for producing the glass composition according to any one of claims 19 to 21, wherein
the glass composition includes, by mass%,
a BeO content percentage of 0% to 1%;
a PbO content percentage of 0% to 1%;
an As₂O₃ content percentage of 0% to 1%;
a Tl₂O content percentage of 0% to 1%;
a CdO content percentage of 0% to 1%;
a UO₂ content percentage of 0% to 1%; and
a Th₂O₃ content percentage of 0% to 1%.

23. The method for producing the glass composition according to claim 22, wherein
a total content percentage of BeO, PbO, As₂O₃, Tl₂O, CdO, UO₂, and Th₂O₃ (BeO + PbO + As₂O₃ + Tl₂O + CdO + UO₂ + Th₂O₃) is 1% or less.

24. The method for producing the glass composition according to claim 19, wherein
by mass%, a content percentage of a first oxide included in the main content components is 50% to 80%, the first oxide being other than SiO₂, B₂O₃, and P₂O₅.

25. The method for producing the glass composition according to claim 24, wherein
the first oxide is TeO₂.

26. The method for producing the glass composition according to claim 24 or 25, wherein
by mass%, a content percentage of a second oxide included in the main content components is 0% to 30%.

27. The method for producing the glass composition according to claim 26, wherein
the second oxide includes at least any one of Bi₂O₃, WO₃, ZnO, BaO, GeO₂, and Ga₂O₃.

28. The method for producing the glass composition according to claim 27, wherein
by mass%, a total content percentage of Bi₂O₃, WO₃, ZnO, BaO, GeO₂, and Ga₂O₃ (Bi₂O₃ + WO₃ + ZnO + BaO + GeO₂ + Ga₂O₃) is 15% to 50%.

29. The method for producing the glass composition according to any one of claims 24 to 28, wherein
by mass%, a content percentage of a third oxide included in the main content components is 0% to 1%.

30. The method for producing the glass composition according to claim 29, wherein
the third oxide includes at least any one of BeO, PbO, As₂O₃, Tl₂O, CdO, UO₂, and Th₂O₃.

31. The method for producing the glass composition according to claim 30, wherein
by mass%, a total content percentage of BeO, PbO, As₂O₃, Tl₂O, CdO, UO₂, and Th₂O₃ (BeO + PbO + As₂O₃ + Tl₂O + CdO + UO₂ + Th₂O₃) is 1% or less.

32. The method for producing the glass composition according to any one of claims 19 to 31, wherein
the crucible and the tool for melting contain at least any one of platinum, gold, and iridium.

33. The method for producing the glass composition according to any one of claims 19 to 32, wherein
the acid solution includes any one of a hydrofluoric acid, a hydrochloric acid, a nitric acid, and a sulfuric acid.

34. The method for producing the glass composition according to any one of claims 19 to 33
a melting temperature is 900 degrees Celsius or lower.

35. The method for producing the glass composition according to any one of claims 19 to 34, wherein
the glass composition is a standard sample for an element analysis.

36. The method for producing the glass composition according to claim 35, wherein
the standard sample for an element analysis is the standard sample for an inductively coupled plasma (ICP) mass spectrometry, a secondary ion mass spectrometry (SIMS), and/or an X-ray fluorescence (XRF) analysis.
